# EUROPEAN PATENT APPLICATION

(11) **EP 4 043 801 A1**
(43) Date of publication of application: **17.08.2022**
(21) Application number: 21156224.4
(22) Date of filing: 10.02.2021
(51) Int. Cl.: F24D 3/08, F24D 13/04, F24D 17/00, F24D 19/10

(54) **SYSTEM FOR PRODUCING HEAT FOR DOMESTIC HOT WATER OR CENTRAL HEATING**

(71) Applicant: DAIKIN INDUSTRIES, LTD., Osaka 530-8323 (JP); Daikin Europe N.V., 8400 Oostende (BE)
(72) Inventor: Kirschner, Timo, 74363 Güglingen (DE)
(74) Representative: Hoffmann Eitle

(57) **Abstract**

The present application relates to a system (100) for producing domestic hot water and heat for central heating comprising a heat generator (1) for obtaining heat from a heat source, the heat generator having a generator outlet port (1.1) and a generator return port (1.2); a central heating circuit (3) having a heating feed port (3.1) and a heating return port (3.2); and a tank (16) having an inlet port (7), an upper port (8) and a lower port (9), the tank (16) containing a fluid which is a heat storing fluid, and the inlet port (7) being configured to feed the heat storing fluid (15) into the tank (16). The heat generator (1), the central heating circuit (3), and the tank (16) are fluidly connected in series so as to allow the fluid (15) to flow from the heat generator (1) via at least one of the central heating circuit (3) and the tank (16) back to the heat generator (1), and the system (100) further comprises a first three-way valve (4) fluidly connected to the heating feed port (3.1) and the heating return port (3.2) and configured to selectively let the fluid bypass, or flow through, the central heating circuit (3); a second three-way valve (6) fluidly connected to the first three-way valve (4), the generator return port (1.2), and the inlet port (7), and configured to selectively let the fluid bypass, or flow through, the tank (16) via the inlet port (7); and a third three-way valve (10) fluidly connected to the upper port (8), the lower port (9), and the generator return port (1.2), and configured to set a relative proportion by which the fluid flows through the upper port (8) and the lower port (9), respectively, to the generator return port (1.2).

## Description

### TECHNICAL FIELD

The present invention relates to a system for producing heat for domestic hot water or central heating which comprises a heat generator for obtaining heat from a heat source, a central heating circuit, and a tank having an inlet port, an upper port, and a lower port, and containing a heat storing fluid.

### BACKGROUND

Heating systems of the above technical field are generally known from the prior art, for example from EP 2 629 020 A2. According to this prior art device, a system for heating a building has a tank containing a heat storing fluid. Usually, and also for the present invention, water is used as the heat storing fluid. However, also other fluids can be used.

The heat storing fluid in the tank, such as water, tends to adopt a layered structure based on layers of different temperatures. Accordingly, the temperature of the heat storing fluid within the tank changes more or less continuously from a relatively low temperature at the bottom of the tank to a relatively high temperature at its top. This layered structure is referred to as stratification and allows the heat storing fluid to have not only a single average temperature at a time, but a relatively broad temperature range.

In the prior art device of the above-mentioned document, the heat storing fluid acts as a heating support heating up fluid which flows through a heat exchanger. However, the heat exchanger is immersed in the heat storing fluid in a vertical orientation and extends over a substantial distance from the top of the tank towards its bottom. Accordingly, the stratification inside the tank is destroyed by the fluid within the heat exchanger being heated up in the top portion of the tank and subsequently flowing through the coil of the heat exchanger from the top of the tank towards its bottom, thereby heating up the heat storing fluid in lower portions of the tank. In this way, heat is effectively transported to the bottom of the tank resulting in internal heating loss because of the heated fluid being transported through the coil of the heat exchanger from the top portion to the bottom portion of the tank, similar to mixing hot and cold heat storing fluid.

Further, the heat exchanger in this configuration cannot be optimally used under the above-mentioned circumstances. The active heat exchanging surface of the heat exchanger for heating support of the fluid within the coil is reduced, if water in different stratification levels has the same or a lower temperature than the flow temperature within the heat exchanger. In other words, the heat exchanger is effectively inactive over a part of its length, namely, where the surrounding heat storing fluid has the same or a lower temperature than the flow temperature of the fluid within the heat exchanger which is to be heated up in the tank. Therefore, a decrease in efficiency of transferring heat to the heat storing fluid in the tank can be observed, if the heat storing fluid is heated up not according to the stratification of the heat storing fluid.

A general trend currently is related to measures of reducing energy consumption of houses. Particularly during spring or autumn, the demand of houses for heat through a central heating is very limited, but not zero. This results in the heating system operating in an on-off cycle over a significant period of the year, which is inefficient. Especially switching between the "on"-state and the "off"-state of the system reduces the effectiveness of a heat generator or a general heat source.

Further, the above-mentioned device cannot make use of the heat energy of the coldest possible return fluid of a heating circuit. The lowest possible temperature of the return fluid would usually be below the temperature of the heat storing fluid in the top portion of the tank so that the return fluid would cool down the top portion of the heat storing fluid. Hence, even if the return fluid might still be warmer than the heat storing fluid in the bottom portion of the tank, a mode of operation to transfer heat energy from the return fluid to the heat storing fluid is not used at all.

A further disadvantage of the above-mentioned device is a relatively inefficient defrost operation in which heat storing fluid of a relatively high temperature, i.e., hot water, is used for any defrost operation. This, in turn, means a reduction of the volume of heat storing fluid for hot drinking water applications like domestic hot water (DHW) because these applications usually need the highest temperature of the heat storing fluid, which usually is not the case for a heating circuit.

As a further consequence, a disadvantage of the prior art configuration is that in the heating mode, in which the fluid is provided to a central heating circuit to heat up the house, the fluid needs to have a lower temperature than in the DHW-mode. Hence, it is not possible to heat up DHW when the heating mode is in operation at the same time.

Accordingly, the known concept leaves room for improvement, even if the known concept is already a relatively efficient and environmentally friendly configuration of a heating system.

JP 2004-294019 A discloses an electric water heating apparatus which allows for preheating water in a hot water storing tank by sharing parts of a pump and a pipeline with a heat exchanger for heating. A lower part in the tank is provided with a heat exchanger for heat recovery to introduce water in a bathtub and perform heat exchange. Introduction pipes of a first heat exchanger for heating and a second heat exchanger for heat recovery are respectively connected to a lead-out pipe of the bathtub. Lead-out pipes of the heat exchanger for heating and the heat exchanger for heat recovery are respectively connected to an introduction pipe of the bathtub, and a selector valve is provided to selectively switch a passage of the lead-out pipe of the bathtub between the heat exchanger for heating and the heat exchanger for heat recovery. However, also this configuration suffers the disadvantages mentioned above with respect to EP 2 629 020 A.

### SUMMARY OF THE INVENTION

Following the above, the present invention aims at solving the problem of how to increase the efficiency of known systems for producing domestic hot water and heat for a central heating, particularly in combination with a heat generator.

This problem is solved by a system for producing heat for domestic hot water or central heating according to claim 1. Preferred features and embodiments of the invention are subject to the dependent claims.

According to the present invention, a system is provided which comprises a heat generator for obtaining heat from a heat source, the heat generator having a generator outlet port and a generator return port. The system further comprises a central heating circuit having a heating feed port and a heating return port, and a tank having an inlet port at a bottom portion of the tank, for example connected to the bottom of the tank or close to it, configured to feed a fluid which is a heat storing fluid into the tank, an upper port and a lower port, and the tank containing the fluid, and preferably means to warm up domestic hot water. The heat generator, the central heating circuit, and the tank are fluidly connected in series so as to allow the fluid to flow from the heat generator via at least one of the central heating circuit and the tank back to the heat generator. According to the invention, the system further comprises a first three-way valve fluidly connected to the heating feed port and the heating return port and configured to selectively let the fluid bypass, or flow through, the central heating circuit, a second three-way valve fluidly connected to the first three-way valve, the generator return port, and the inlet port, and configured to selectively let the fluid bypass, or flow through, the tank via the inlet port, and a third three-way valve fluidly connected to the upper port of the tank, the lower port of the tank, and the generator return port, and configured to set a relative proportion by which the fluid flows through the upper port and the lower port, respectively, to the generator return port.

In this way, it is possible since the return flow of the central heating can be guided so that the fluid is inserted into the tank from close to the bottom, the heat energy remaining in the returned fluid can be reused by 100% without the necessity of using a heat exchanger which would be related to losses in the heat transfer. In other words, it is entirely excluded that a non-Optimo heat exchange takes place, for example, because of a reduction of the effective active heat exchange surface. Rather, since the fluid is directly added to the tank, the heat energy contained in the fluid can be used completely.

In the above configuration, the lower part of the tank can be used as a buffer volume for fluid of a low temperature while maintaining their stratification in the tank, if the cool liquid is added to the tank from close to the bottom. Heat energy which is transferred to tapping water leaves cold fluid to return to the tank from close to the bottom. As a consequence, very cold fluid can be drawn from the tank and fed to the heat generator which improves the efficiency of the heat generator due to a larger temperature difference in the heat generator. As a further consequence, since the heat generator is fed by the coldest possible fluid, the cycling effect, i.e., cycling between an "on"-state and an "off"-state, can be reduced because the heat generator can be left in the operating state for a longer period of time thereby generating usable heat in the system.

In other words, the lower part of the tank can be used as a buffer to prolong the operational time, i.e., the bonds state, and allows for a longer period of non-operation of the heat generator so that the switching between the onstage and the offstage innocuous fewer times within a certain period, thereby increasing the efficiency of the heat generator. How long the heat generator is left on or off depends on the demand of hot water as well as the size of the tank, but the present invention allows for increasing this. With respect to a configuration in which the tank is not fed by cold returning fluid at close to the bottom portion of the tank.

Further, in view of the present configuration, it is possible to use heat energy stored in the heat storing fluid of the tank at different temperature levels so that it is not possible to use the heat of the heat storing fluid for central heating and domestic hot water applications at the same time.

Further, this configuration allows for preheating the heat storing fluid in the tank which is related to a higher efficiency of the heat generation if compared to the domestic hot water mould because of the lower temperature where the heat generator works at a higher efficiency. Since the heat storing fluid in the tank is preheated according to the present configuration, the capacity of heat usable for domestic hot water is also increased indirectly. For example, it is possible to heat up heat storing fluids of only the top part of the tank to instantly heat up the preheated fluid to the setpoint of the domestic hot water application.

Since heating up the fluid to a higher temperature only allows for reduced efficiency, if compared to heating processes on a lower temperature range, the present invention which only requires this relatively inefficient step where really necessary, whereas the much more efficient operation is predominantly used, is overall more efficient than the prior art.

This latter process can be carried out in at least two ways. On the one hand, it is possible to reduce the circulation speed at which the fluid circulates to, through and from the central heating circuit, which means that less heat energy is transported to the central heating circuit, if the temperature of the fluid is kept constant. The same heat energy is transported to the central heating circuit in case of a reduction of the circulation speed and, at the same time, an increase of the temperature of the fluid. On the other hand, it is of course possible to use the fluid only from the top portion of the tank for further heating up to the setpoint of domestic hot water.

By means of the present invention, it is possible to improve the efficiency of the heating process. Particularly, preheating of domestic hot water and also buffering of heat of fluid having a relatively low temperature in the tank is possible, thereby avoiding cycling effects which are detrimental for the efficiency of the heating.

An extensive use of on-off-cycles can be avoided even during spring or autumn because the heat storing fluid can be used as a buffer for heat energy of not only fluid of high temperature, but also of low temperature. This effect increases the efficiency of the system over prior art systems because of a more efficient usability of a heat generator which can be operated under full load for a longer period of time resulting in fewer switching operations between "on"-state and "off"-state.

It is also possible to run a defrost operation at higher efficiency. For defrosting, it is not necessary to use high temperature fluid, but as long as the temperature of the fluid is sufficiently above the freezing level to not freeze in the central heating circuit, the defrost operation can be carried out effectively. Since defrosting is not meant to heat up the central heating circuit, but to exclude freezing of the central heating circuit, the required temperature of the fluid is much lower than for the heating operation. The present invention allows for more efficient defrosting by using a relatively low temperature level for the defrosting fluid in order not to waste heat energy of high temperature heat storing fluid in the top portion of the tank, for example. Rather, a temperature level corresponding to the temperature of the heat storing fluid in the bottom portion of the tank is already sufficient for the defrosting, so that it is not necessary to use heat energy at the higher temperature level at the top of the tank.

According to a preferred embodiment, the inlet port comprises a stratification pipe, also known as stratification tube, stratifier tube, stratifier pipe, or inlet stratifier, for example. Accordingly, the stratification inside the tank is not destroyed when feeding the heat storing fluid via the inlet stratification pipe into the tank because the fluid returning from the heating circuit and being fed to the tank enters the tank at a vertical position where the fluid in the tank has a density which is as close as possible to the density of the fluid to be fed to the tank. Hence, since density is proportional to temperature, internal losses due to temperature mixing can be reduced. In addition, a cold fresh water supply can be connected to the tank in its close to bottom portion where cold fluid of the lowest temperature is stored for tapping. The cold water supply is preferably not connected to the stratification pipe.

According to this configuration, the water which returns from the central heating circuit can directly be inserted into the tank at the vertical level where the stratification of the fluid within the tank is maintained. With that effect the stored domestic hot water capacity is indirectly enlarged before the heat generator is operated to heat up domestic hot water again. With the stratification pipe, the flow of heated fluid is fed directly to the top area of the tank so that high temperature fluid can be taken from that top area without the need of heating up all of the fluid in the tank to raise the average temperature of the fluid.

Perferably, the first three-way valve is configured to selectively let the fluid partially bypass and partially flow through the central heating circuit.

In this way, further flexibility is achieved in that it is not only possible to let the fluid completely bypass or flow through the central heating circuit, but also partially. This allows a finer adjustment of the amount of heat energy to be used in, or to bypass, the heat storing fluid. Further, it allows for a finer adjustment of the circulation of the fluid through other components of the system, in particular the heat generator. However, it is also possible to configure the first three-way valve so as to only let the fluid completely bypass or flow through the central heating circuit.

In a preferred embodiment, the second three-way valve is configured to selectively let the fluid partially bypass and partially flow through the tank.

In this way, further flexibility is achieved in that it is not only possible to let the fluid completely bypass or flow through the tank, but also partially. This allows a finer adjustment of the amount of heat energy to be buffered in, or taken from, the tank via the heat storing fluid. However, it is also possible to configure the second three-way valve so as to only let the fluid completely bypass or flow through the tank.

Preferably, the third three-way valve is configured to set the temperature of the heat storing fluid fed from the tank to the heat generator by mixing relatively hot heat storing fluid from the upper port and relatively cold heat storing fluid from the lower port.

According to this configuration, the heat energy stored in the heat storing fluid can be most efficiently used to be heated to a desired temperature. Firstly, the stratification within the tank is maintained. Secondly, the operation of the heat generator can be optimised in that the heat generator can be operated at higher or lower, controlled inlet temperatures, for example depending on whether heat for the central heating, i.e. of a relatively low temperature, or for domestic hot water, i.e. of a relatively high temperature, is required. Since the heat storing fluid is not only taken from the top portion or from the bottom portion, respectively, but also as a mixture of the two of them, also temperatures between the temperature of the fluid in the top portion and the temperature of the fluid in the bottom portion can be used.

The fluid having a temperature resulting from the above-mentioned mixing can be used, for example, to reach a temperature of the fluid in the top area of the tank of more than 40°C. A common heat generator can only add a temperature difference of 5°C to the inflowing fluid. If only cold water can be supplied to the heat generator, the fluid in the tank cannot selectively and partially be heated up to a particularly high temperature. Rather, the complete tank, i.e. all the fluid in the tank, starting with the coldest fluid, must be heated up before hot water is available. On the other hand, if only hot fluid is supplied from the tank to the heat generator, only hot water is further heated also resulting in an inefficient use of the heat provided by the heat generator.

However, it is also possible that such mixing is not provided by the third three-way valve, but that only either the upper or the lower port is used for feeding the heat generator.

A further preferred embodiment of the system comprises a pump which is configured to drive the fluid to flow from the heat generator via at least one of the central heating circuit and the tank back to the heat generator. Such a pump is advantageous in that it facilitates controlling the amount of heat storing fluid to be circulated through the system and in particular towards the respective elements of the system. Such a pump facilitates the operation of the system but is not entirely necessary for that operation. However, using a pump allows for more precisely adjusting the flow speed of the fluid through the system and thereby more precisely controlling the amount of heat being transferred. In addition or as an alternative to this pump, it is also possible to provide one or more pump or pumps for selectively driving the flow of the fluid through the tank or the central heating circuit.

Depending on the setting of the first and second three-way valves, respectively, it is also possible that the pump circulates the fluid only from the heat generator back to the heat generator without the fluid passing the central heating circuit or the tank. However, usually, the heat energy added to the fluid in the heat generator is used in the central heating unit or the tank, or both.

In a preferred embodiment, the system further comprises an electrical heater configured to heat up the heat storing fluid. Such an electrical heater can, for example, be used as an additional heat source, if the heat generator is uncapable of heating the fluid up to the desired temperature, in particular for domestic hot water applications. According to this preferred embodiment, the heat generator is primarily used, but supplemented by heat energy supplied by the electrical heater.

In a particularly preferred embodiment, the electrical heater is located downstream of the generator outlet and upstream of the heating feed port so as to additionally heat up the heat storing fluid flowing from the heat generator to the central heating circuit. This position of the electrical heater is best suited because the heat generator can operate at relatively low temperature range where it is particularly efficient, whereas only the last portion of the heat energy to be supplied to the fluid is provided by the electrical heater. In total, this concept makes maximum use of the heat generator because of the temperature level at which the heat generator is operated so that supplemental electrical energy is used to the smallest possible extent. Alternatively or additionally, the electrical heater can be located inside of the tank which allows for heating up the domestic hot water to be taken from the tank by the electric heater, and heating up the fluid for the central heating circuit by the heat generator, only.

Preferably, the system comprises a heat exchanger to transfer heat from the heat storing fluid to the domestic hot water.

The heat exchanger to transfer heat from the heat storing medium to the domestic hot water can be located inside or outside of the tank and allows for separating the heat storing fluid, on the one hand, and the domestic hot water, on the other hand. Therefore, the heat storing fluid can be chosen irrespective of any requirements to be met by drinking water so that ingredients or additives can be contained in the heat storing fluid which could be unallowed in drinking water. Hence, a broader range of fluids can be used as heat storing fluid, which can be particularly helpful in terms of maintenance or wear of the system.

According to a preferred embodiment, the heat exchanger comprises a heat exchanger coil immersed in the heat storing fluid in the tank. In this way, the heat energy can be transferred between the heat storing fluid and the fluid flowing through the heat exchanger in a well-controlled fashion and allows for making use of generally known devices. Further, as opposed to an external heat exchanger, there is only little additional space required for the heat exchanger, as long as the tank is sufficiently sized for containing the heat exchanger coil. Further, it is not required to actively drive the heat storing fluid to the heat exchanger coil in order to exchange heat.

As an alternative, or in addition, to the above-mentioned embodiment, the heat exchanger preferably comprises a domestic hot water heat exchanger, in particular a plate heat exchanger, but also other types of heat exchanger are usable for this domestic hot water heat exchanger, outside of the tank, the domestic hot water heat exchanger being fluidly connected to the upper port of the tank and the lower port of the tank so as to allow the heat storing fluid to flow from the upper port through the domestic hot water heat exchanger and back to the tank via the lower port.

Providing an external heat exchanger outside of the tank allows for more flexibility in placing the heat exchanger within the building and minimising the size of the tank. Further, the dimensions of the heat exchanger, and therefore the heat exchanging capacity, is not so closely linked with the size of the tank which increases flexibility of the overall system.

An optional heat exchanger pump configured to drive the heat storing fluid to flow through the domestic hot water heat generator allows for more precisely controlling the amount of heat storing fluid flowing carrying heat energy through the heat exchanger, i.e., the amount of heat transferred to the domestic hot water within the heat exchanger.

Further advantages of the invention can be derived from the whole set of claims as well as the following description of the figures and preferred embodiments. For example, a further advantage of the invention is a function of free cooling. When the heat storing medium in the bottom portion of the tank is cooled down due to tapping, it can be used, for example during the summer when the environment is relatively warm, to provide cold flow water to the house for which the heating is installed. Providing the cold flow water to the house under these circumstances results in a warm return flow from the house, which subsequently heats up the heat storing medium in the bottom portion of the tank. This effect can also be used for heat generators which normally have no cooling function.

### BRIEF DESCRIPTION OF THE FIGURES

- FIG. 1: illustrates a first embodiment of a preferred system for producing domestic hot water and heat for central heating.
- FIG. 2: illustrates a second embodiment of a preferred system for producing domestic hot water and heat for central heating.

### DETAILED DESCRIPTION OF PREFERRED EMBODIMENTS

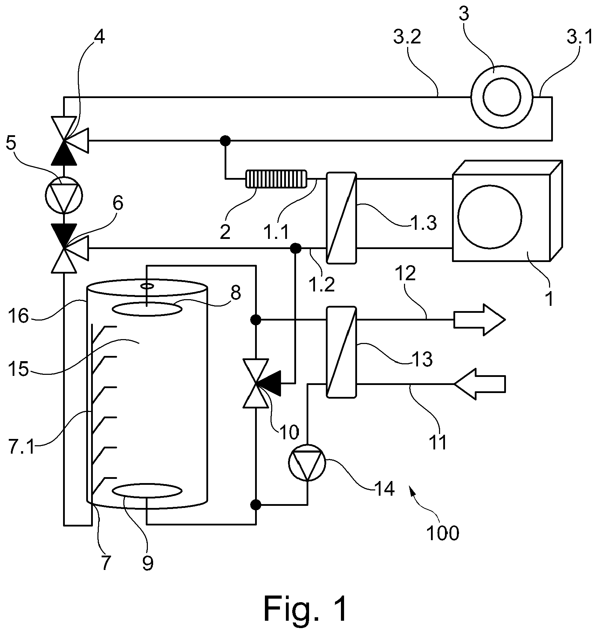

Figure 1 illustrates a first embodiment of the preferred system 100 for producing heat for domestic hot water or central heating. The system 100 comprises a heat generator 1, a central heating circuit 3 and a tank 16 holding a fluid which is a heat storing fluid 15. The heat generator 1 supplies heat energy via a generator heat exchanger 1.3, which in turn comprises a generator outlet port 1.1 through which the heated fluid is dispensed and a generator return port 1.2 through which the fluid to be heated, or cooled, as the case may be, is received by the generator heat exchanger 1.3 and, therefore indirectly, the heat generator 1.

The central heating circuit 3 comprises a heating feed port 3.1 and a heating return port 3.2. The fluid is fed to the central heating circuit 3 via the heating feed port 3.1, and exits the central heating circuit 3 via the heating return port 3.2. The tank 16 has an inlet port 7, an upper port 8, and a lower port 9. The inlet port 7 is configured to feed the heat storing fluid 15 to the tank 16 and can be connected at or close to a bottom of the tank and comprises, in the illustrated embodiment, a stratification pipe 7.1.

The system 100 further comprises an electrical heater 2 downstream of the generator outlet port 1.1 and upstream of the heating feed port 3.1 to add heat energy to the fluid, for example if the fluid is not sufficiently heated up by the generator heat exchanger 1.3. The electrical heater 2 is predominantly provided as supplemental means to heat up the fluid because using the heat generator 1 is usually preferred, with particular respect to environmental friendliness of the system 100, than the electrical heater 2.

However, the electrical heater 2 can, of course, also be used as a backup of the heat generator 1.

A first three-way valve 4 is located to be fluidly connected to the heating feed port 3.1 and the heating return port 3.2 and configured to selectively let the fluid bypass, or flow through, the central heating circuit 3. In other words, the first three-way valve 4 can be set so that the fluid from the heat generator 1 can transport the heat energy to the central heating circuit 3, or another portion of the system 100.

If the first three-way valve 4 is set to let the fluid bypass, or partially bypass, the central heating circuit 3, the fluid is guided via a circulation pump 5 to a second three-way valve 6 which is fluidly connected to not only the first three-way valve 4, but also the inlet port 7 of the tank 16, on the one hand, and a return line to let the fluid return via the generator return port 1.2, to the heat generator 1, more specifically the generator heat exchanger 1.3.

For example, if the temperature of the fluid at the second three-way valve 6 is low and/or the amount of heat energy required in the central heating circuit 3 is high, it might be preferred to let the fluid directly return via the generator return port 1.2 and the generator heat exchanger 1.3 to the heat generator 1 to be supplied with heat energy which can then be fed via the generator outlet port 1.1, and optionally the electrical heater 2, back to the central heating circuit 3 to carry the heat energy to the central heating circuit 3.

If the second three-way valve 6, which is the valve for temperature regulation and/or by passing the tank 16, is set to feed the fluid, via the inlet port 7, fully or partially to the tank 16, the fluid enters the tank 16 via the inlet port 7 and the stratification pipe 7.1 which, in the preferred embodiment of figure 1, is used as a preferred means to feed fluid to the tank 16. The heat storing fluid 15 within the tank 16 has a certain temperature distribution, namely, layers of different temperatures, from low temperatures in the bottom to high temperatures in the top of the tank 16. This layered distribution of heat storing fluid 15 is usually referred to as "stratification". Using a stratification pipe 7.1 allows the fluid added to the tank 16 to be dispensed along the vertical direction within the tank 16 at a vertical position which corresponds to its temperature. In other words, fluid of a particular temperature is dispensed through the stratification pipe 7.1 at a vertical position, which corresponds to the vertical position of the layer of fluid which has a temperature similar to the fluid added to the tank 16.

In this way, the stratification of the fluid 15 within the tank 16 can be maintained. This reduces internal loss due to mixing processes, and the resulting loss of heat energy in the tank 16. Further, it allows adding the fluid at a level somewhere in-between the upper port 8 and the lower port 9.

On the other hand, fluid 15 from within the tank 16 is fed to the remaining system 100 through either the upper port 8 or the lower port 9. This means that the fluid taken from the tank 16 is either the hottest or the coldest fluid of the tank 16. As one consequence, this allows for selectively heating up the fluid of the top portion of the tank 16 which, being the hottest portion of the fluid 15 within the tank 16, is fed to the system via the upper port 8. This way, it is possible to efficiently add heat energy from the heat generator 1. A heat generator 1 usually can only add a limited amount of heat energy to thereby increase the temperature of the fluid by a limited amount of, for example, 5°C. In order to reach a high temperature fluid in the quickest possible way, for example, if tapping water of high temperature is required, it is possible to use the fluid of the top portion of the tank 16 by drawing it through the upper port 8, heat this fluid up in the generator heat exchanger 1.3, optionally additionally by the electrical heater 2, let the fluid bypass the central heating circuit 3 and return to the tank 16 through the stratification pipe 7.1 to thereby specifically heat up only the top portion of the tank 16.

Downstream of the upper port 8 as well as the lower port 9, the system 100 of the first embodiment according to figure 1 comprises a third three-way valve 10 which is a valve that connects the upper port 8 and the lower port 9 with each other and the generator return port 1.2 of the generator heat exchanger 1.3 of the heat generator 1. This third three-way valve 10 allows mixing heat storing fluid 15 from within the tank 16 which was taken from the tank 16 through the upper port 8 or the lower port 9. Since the upper port 8 only allows for dispensing fluid 15 of the highest temperature of the fluid 15 within the tank 16, due to the stratification, whereas the lower port 9 only allows for dispensing fluid 15 of the lowest temperature of the fluid 15 within the tank 16, the third three-way valve 10 allows for any temperature between the highest and lowest temperatures of the fluid 15 within the tank 16. This allows for specifically heating up the heat storing fluid 15 and to feed the tank 16 through the stratification pipe 7.1 with fluid of a particular temperature.

In addition to the above, the embodiment according to figure 1 further comprises, as means to warm up domestic hot water, in particular freshwater or drinking water, a plate heat exchanger 13, which is a heat exchanger that is located outside of the tank 16, but connected to the upper port 8 for receiving hot fluid and the lower port 9 for returning cold fluid back to the tank 16.

To drive the circulation of the fluid, a heat exchanger pump 14 is provided. A domestic hot water inlet 11 is on the other side of the plate heat exchanger 13 and supplies domestic water or fresh water to be heated up within the plate heat exchanger 13. A domestic hot water outlet 12 then transports the heated domestic hot water, i.e., the heat added to the domestic hot water in the plate heat exchanger 13, to its intended application, such as a shower, as hot water. As an alternative to a plate heat exchanger 13 as illustrated in figure 1, also any other type of heat exchanger could be used outside of the tank 16.

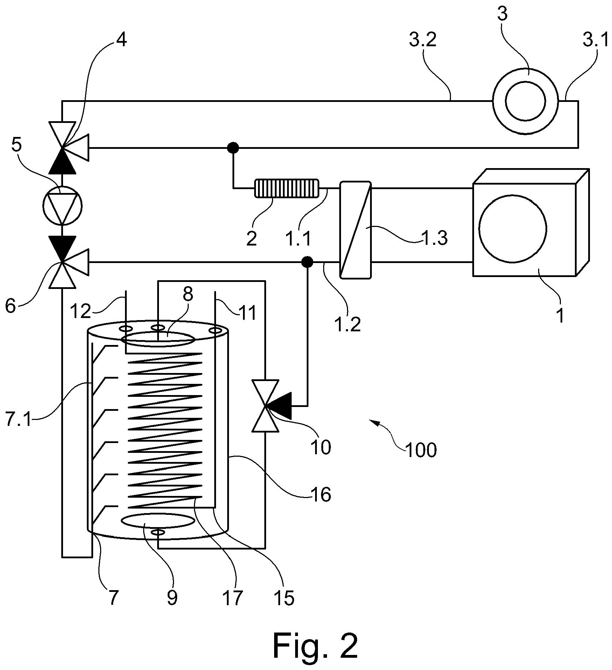

Figure 2 illustrates a second embodiment of the preferred system 100 for producing domestic hot water and heat for central heating. Basically, all the elements illustrated in figure 1 and described before, which are similar also in the second embodiment, carry the same reference numerals and will not repeatedly be explained, but reference is being made to the above description of the first embodiment.

As an alternative to the first embodiment, the heat exchanger for heating up domestic hot water which, in the first embodiment, was described to be a plate heat exchanger 13, is realised in the second embodiment as a heat exchanger coil 17 immersed in the hot storing fluid 15 within the tank 16. In other words, the heat exchanger for heating up domestic hot water, i.e., for producing domestic hot water, is realised in the second embodiment by means of a heat exchanger coil 17 within the tank 16. This way, it is possible to heat up domestic hot water without the need of an external heat exchanger such as the plate heat exchanger 13 of the first embodiment. On the other hand, the second embodiment requires the tank 16 to be sufficiently sized to house the heat exchanger coil 17.

### LIST OF REFERENCE NUMERALS

- 1: heat generator
- 1.1: generator outlet port
- 1.2: generator return port
- 1.3: generator heat exchanger
- 2: electrical heater
- 3: central heating circuit
- 3.1: heating feed port
- 3.2: heating return port
- 4: first three-way valve
- 5: circulation pump
- 6: second three-way valve
- 7: inlet port
- 7.1: stratification pipe
- 8: upper port
- 9: lower port
- 10: third three-way valve
- 11: domestic hot water inlet
- 12: domestic hot water outlet
- 13: plate heat exchanger
- 14: heat exchanger pump
- 15: heat storing fluid
- 16: tank
- 17: heat exchanger coil
- 100: system

## Claims

1. A system (100) for producing heat for domestic hot water or central heating comprising
a heat generator (1) for obtaining heat from a heat source, the heat generator having a generator outlet port (1.1) and a generator return port (1.2);
a central heating circuit (3) having a heating feed port (3.1) and a heating return port (3.2); and
a tank (16) having an inlet port (7) at a bottom portion of the tank, an upper port (8) and a lower port (9), the tank (16) containing a fluid which is a heat storing fluid, and the inlet port (7) being configured to feed the heat storing fluid (15) into the tank (16);
wherein the heat generator (1), the central heating circuit (3), and the tank (16) are fluidly connected in series so as to allow the fluid (15) to flow from the heat generator (1) via at least one of the central heating circuit (3) and the tank (16) back to the heat generator (1);
the system (100) further comprising
a first three-way valve (4) fluidly connected to the heating feed port (3.1) and the heating return port (3.2) and configured to selectively let the fluid bypass, or flow through, the central heating circuit (3);
a second three-way valve (6) fluidly connected to the first three-way valve (4), the generator return port (1.2), and the inlet port (7), and configured to selectively let the fluid bypass, or flow through, the tank (16) via the inlet port (7); and
a third three-way valve (10) fluidly connected to the upper port (8), the lower port (9), and the generator return port (1.2), and configured to set a relative proportion by which the fluid flows through the upper port (8) and the lower port (9), respectively, to the generator return port (1.2).

2. The system (100) according to claim 1,
wherein the inlet port (7) comprises a stratification pipe (7.1).

3. The system (100) according to claim 1 or 2,
wherein the first three-way valve (4) is configured to selectively let the fluid partially bypass and partially flow through the central heating circuit (3).

4. The system (100) according to any one of the preceding claims,
wherein the second three-way valve (6) is configured to selectively let the fluid partially bypass and partially flow through the tank (16).

5. The system (100) according to any one of the preceding claims,
wherein the third three-way valve (10) is configured to set the temperature of the heat storing fluid (15) fed from the tank (16) to the heat generator (1) by mixing relatively hot heat storing fluid from the upper port (8) and relatively cold heat storing fluid from the lower port (9).

6. The system (100) according to any one of the preceding claims,
further comprising a pump (5) which is configured to drive the fluid to flow from the heat generator (1) via at least one of the central heating circuit (3) and the tank (16) back to the heat generator (1).

7. The system (100) according to any one of the preceding claims,
further comprising an electrical heater (2) configured to heat up the heat storing fluid.

8. The system (100) according to claim 7,
wherein the electrical heater (2) is located downstream of the generator outlet (1.1) and upstream of the heating feed port (3.1) so as to additionally heat up the heat storing fluid flowing from the heat generator (1) to the central heating circuit (3).

9. The system (100) according to any one of the preceding claims,
further comprising a heat exchanger (13, 17) to transfer heat from the heat storing fluid (15) to the domestic hot water.

10. The system (100) according to claim 9,
wherein the heat exchanger comprises a heat exchanger coil (17) immersed in the heat storing fluid (15) in the tank (16) .

11. The system (100) according to claim 9 or 10,
wherein the heat exchanger comprises a plate heat exchanger (13) outside of the tank (16), the plate heat exchanger (13) being fluidly connected to the upper port (8) of the tank (16) and the lower port (9) of the tank (16) so as to allow the heat storing fluid (15) to flow from the upper port (8) through the plate heat exchanger (13) and back to the tank (16) via the lower port (9).

12. The system (100) according to claim 11,
further comprising a heat exchanger pump (14) configured to drive the heat storing fluid (15) to flow through the plate heat generator (13).
